(19) **Europäisches Patentamt**

**European Patent Office**

**Office européen des brevets**

(11) **EP 1 551 139 B1**

(12) **EUROPÄISCHE PATENTSCHRIFT**

(45) Veröffentlichungstag und Bekanntmachung des Hinweises auf die Patenterteilung:
**02.08.2006 Patentblatt 2006/31**

(51) Int Cl.:
***H04L 12/56*** *(2006.01)*

(21) Anmeldenummer: **04106823.0**

(22) Anmeldetag: **22.12.2004**

(54) **Verfahren zur Beeinflussung eines Paket-basierten Datenstromes**

Method for influencing a packet data flow

Procédé influençant un flux de données par paquets

(84) Benannte Vertragsstaaten:
**DE ES FI FR GB**

(30) Priorität: **02.01.2004 DE 102004001009**

(43) Veröffentlichungstag der Anmeldung:
**06.07.2005 Patentblatt 2005/27**

(73) Patentinhaber: **SIEMENS AKTIENGESELLSCHAFT**
**80333 München (DE)**

(72) Erfinder: **Menth, Michael**
**97255, Oellingen (DE)**

(56) Entgegenhaltungen:
**US-A- 6 167 050          US-B1- 6 373 824**

- **YIN JIAN-HUA ET AL: "On enforcing the fairness of bandwidth allocation among internet flows" PROCEEDINGS OF THE ICCT2003, Bd. 1, 9. April 2003 (2003-04-09), Seiten 235-238, XP010643581**
- **JU T ET AL: "Congestion control by traffic shaping for ground/satellite network" MILCOM 97 PROCEEDINGS MONTEREY, CA, USA 2-5 NOV. 1997, NEW YORK, NY, USA,IEEE, US, Bd. 3, 2. November 1997 (1997-11-02), Seiten 1318-1322, XP010260770 ISBN: 0-7803-4249-6**

**Beschreibung**

Der Anmeldungsgegenstand betrifft ein Verfahren zur Beeinflussung eines Paket-basierten Datenstromes.

Derartige Verfahren kommen in Kommunikationsnetzen oder anderen Bereichen, in denen die Zeitabstände zwischen Elementen (z.B. Paketen) wichtig sind, zur Anwendung.

Ein Token Bucket (Füllstandsbehälter) - wie auch ein Dual Token Bucket - erlaubt einen großen Burst und danach ständige Maximalrate. Wenn viele solche Ströme auf eine Leitung gemultiplexed werden, die mit der exakten Summenrate der Ströme arbeitet, dann ergibt sich die maximale Warteschlange im Multiplexer aus der Addition der Maximal-Bursts (Bucket-Größen) der Token Buckets. Dieser Fall tritt ein, wenn alle Quellen saturiert sind, durch einen Spacer begrenzt werden, und gleichzeitig zu senden beginnen. Die Durchlaufzeit des Systems ist die Wartezeit in der Spacer- und der Multiplexer-Warteschlange. Problematisch ist das für Echtzeitverkehr, denn dieser erfährt auch die volle Wartezeit in der Multiplexer-Warteschlange, obwohl er nur mit wenig Verzögerung weitergeleitet werden darf.

Dem Anmeldungsgegenstand liegt das Problem zugrunde, ein Verfahren anzugeben, mittels dessen die Durchlaufzeit/Verzögerung von Paket-basiertem Datenverkehr, insbesondere Datenverkehr mit Echtzeitanforderung in einem mit einem Spacer und einem Multiplexer gebildeten System, reduziert werden kann.

Das Problem wird durch ein Verfahren mit den Merkmalen des Anspruchs 1 gelöst.

Das erfindungsgemäße Verfahren bewirkt bei Anwendung in einem Spacer, dass in dem nachfolgenden Multiplexer die Belastung der Warteschlange durch große Bursts nach einer Weile durch eine kleine, kurzfristige Reduktion der Senderate wieder ausgeglichen wird.

Das erfindungsgemäße Verfahren weist gewissermaßen eine Gedächtnisfunktion bezüglich vorausgegangenem Burstartigen Datenverkehr auf.

Das erfindungsgemäße Verfahren ist in vorteilhafter Weise unabhängig von den Paketgrößen und eignet sich auch für nach dem Internet-Protocol (IP) - übertragene Pakete.

Vorteilhafte Weiterbildungen des Anmeldungsgegenstandes sind in den Unteransprüchen angegeben.

Der Anmeldungsgegenstand wird im Folgenden als Ausführungsbeispiel anhand von Figuren in einem zum Verständnis erforderlichen Umfang näher erläutert.

Dabei zeigen:

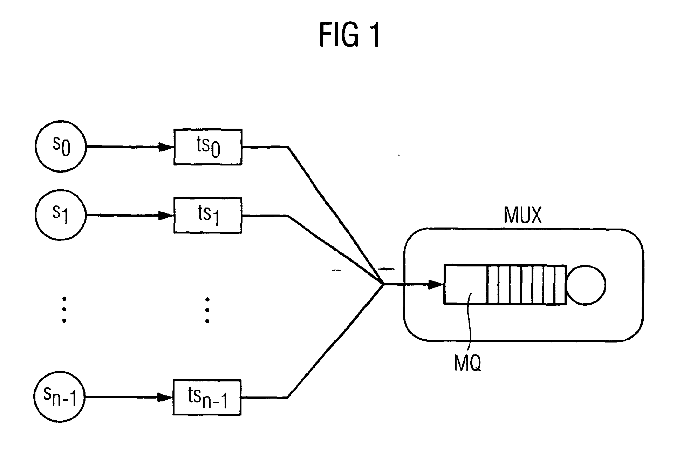

Fig 1 zeigt das Multiplexen von beeinfussten (engl.: shaped) Datenströmen,

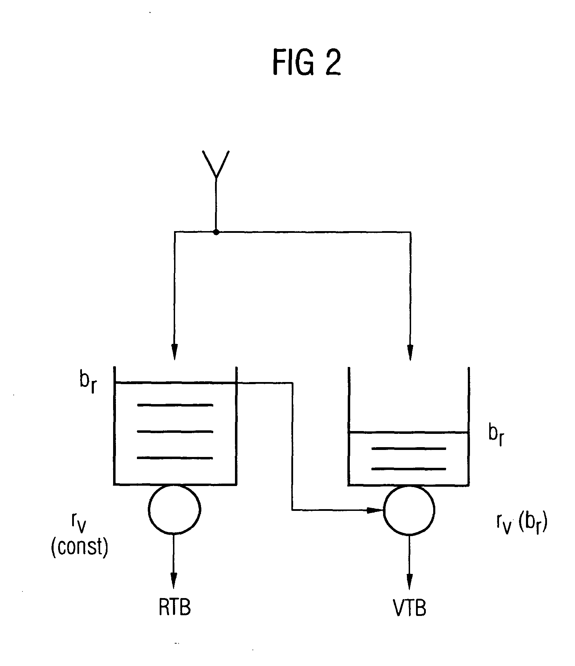

Fig 2 eine erste erfindungsgemäße Ausgestaltung der Datenbeeinflussungseinrichtung ts mit variabler Rate und

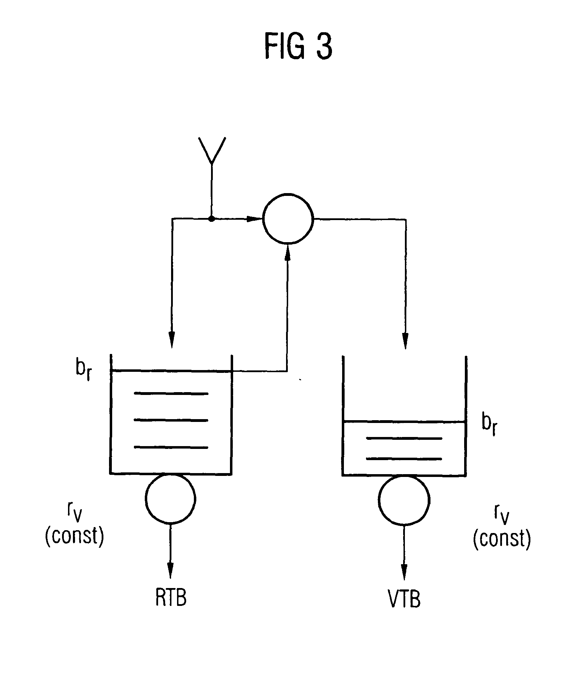

Fig 3 eine zweite erfindungsgemäße Ausgestaltung der Datenbeeinflussungseinrichtung ts mit variabler virtueller Paketgröße.

Eine Mehrzahl von Datenquellen $S_0..S_{n-1}$ (für: source) leitet Datenpakete über zugehörige Datenverkehrsbeeinflusser $ts_0..ts_{n-1}$ einem gemeinsamen Multiplexer MUX, der eine Warteschlange MQ (für: Multiplexer-Queue) aufweist, zu. In einem Datenverkehrsbeeinflusser wird der mit Datenpaketen gebildete Datenstrom nach Maßgabe der vereinbarten Verkehrsbeschreibung, wie z. B. Datenrate beeinfusst (engl.: shaped).

Das erfindungsgemäße Verfahren sei als Elastic Token Bucket (ETB) bezeichnet.

Verkehrsbeschreibung meint eine Rechenvorschrift, die den frühest möglichen Erscheinungszeitpunkt ET (für: earliest time) eines nächsten Paketes in Abhängigkeit früherer Paketankünfte bestimmt.

Policer meint Netzwerkelemente, wie z.B. Vermittlungseinheiten, die Datenpakete empfangen und diese weiterleiten. Z.B. um sich oder nachfolgende Netzwerkelemente vor Überlast zu schützen, kontrollieren sie den Verkehr beim Empfang, ob dessen Datenpakete einer vorher ausgehandelten Verkehrsbeschreibung entsprechen. Ein Policer ist eine Vorrichtung in einem Netzwerkelement, die ein ankommendes Paket verwirft, falls es an diesem Netzwerkelement vor seiner ET (also zu früh) ankommt. Es wird dann aber auch nicht mehr für die Kontrolle der nachfolgenden Pakete berücksichtigt. Um solchem Verlust von Datenpaketen vorzubeugen, sind sendende Netzwerkelemente bestrebt, Datenpakete so zu senden, dass sie der ausgehandelten Verkehrsbeschreibung entsprechen.

Ein Spacer ist eine Vorrichtung in einem sendenden Netzwerkelement, das jedes Paket bis zu seiner ET verzögert um es dann erst senden zu lassen.

Gängige Verkehrsbeschreibungen

Bei konstanter Rate (Constant Bitrate CBR) darf der Datenstrom zu keinem Zeitpunkt eine vereinbarte Rate R übersteigen, d.h. nach einem konformen Paket der Größe p muss bis zum nächsten konformen Paket p/R Zeit verstreichen. Das frühest mögliche Auftreten eines nächsten konformen Paketes wird in der Variable ET gespeichert und zu Beginn mit der aktuellen Zeit initialisiert. Ein Paket ist konform, wenn es zum Zeitpunkt ET oder später auftritt. Dann wird ET durch ET+p/R ersetzt. Nicht-konforme Pakete ändern nichts an den Variablen.

Die Funktion IsConform berechnet die Policing-Funktion, t ist dabei der Zeitparameter zum Aufruf der Funktion:

IsConform(p,t){return t≥ET;}

Falls das Paket nicht verworfen, sondern verzögert werden soll, berechnet die Funktion Time2Wait die benötigte Verzögerungszeit:

Aus Time2Wait(p,t){return minx≥t (x| IsConform(p,x));} ergibt sich
Time2Wait(p,t){return max (0, ET-t);}

Beim Token Bucket schwingt die Vorstellung mit, dass ein Eimer (Bucket) mit b (maximal B) Kontroll-Tokens über die Konformität des Verkehrs befindet. Solange der Eimer nicht maximal mit Kontroll-Tokens gefüllt ist (b=B), fließen neue Kontroll-Tokens mit konstanter Rate R in den Eimer. Der Eimer ist zu Beginn gefüllt, d.h. b=B. Die Variable LA speichert die Ankunft des letzten konformen Paketes und wird zu Beginn mit -∞ initialisiert. Ein Paket der Größe p ist zum Zeitpunkt t konform, wenn es dem Eimer p/R Kontroll-Token entnehmen kann. Dies kann durch die Bedingung p≤min(b+(t-LA)*R,B) abgeprüft werden. Trifft dies zu, dann ist das Paket konform, die Variable b wird durch b=min(b+ (t-LA)*R,B)-p/R ersetzt und danach LA durch LA=t. Ist diese Bedingung nicht erfüllt, dann ist das Paket nicht konform und die Variablen werden nicht verändert. Eine maximale Paketgröße von B Tokens muss immer eingehalten werden. Auch hier kann man die Funktionen IsConform und Time2Wait berechnen:

- IsConform(p,t){return p≤min (b+ (t-LA) *R,B);}
- Aus Time2Wait (p, t) {return $\min_{x \geq t}$ (x| IsConform(p,x));} ergibt sich unter Voraussetzung von p≤B
  Time2Wait(p,t){return max (0, LA+max (0, (p-b)/R)-t);}

Der Dual Token Bucket vereinbart eine Maximalrate $R_{max}$ und eine durchschnittliche Rate $R_{avg}$ eines Verkehrs, die jeweils durch eine Burst Toleranz $B_{max}$ und BS1 kontrolliert werden. Ein Token Bucket ($R_{max}$, $B_{max}$) kontrolliert die Maximalrate, ein anderer Token Bucket ($R_{avg}$, $B_{avg}$) die durchschnittliche Rate. Ein Paket ist nur dann konform, wenn es von beiden Token Buckets akzeptiert wird.

- IsConform (p,t) {
  return (p≤min ($b_{max}$+ (t-LA) *$R_{max}$, $B_{max}$) AND (p≤min ($b_{avg}$+ (t-LA) * $R_{avg}$, $B_{avg}$) ; }
- Aus Time2Wait(p,t) {return $\min_{x \geq t}$ (x| IsConform(p,x));} ergibt sich unter Voraussetzung von p≤min($B_{max}$,$B_{avg}$)
  Time2Wait(p,t) {return max (0, LA+max (0, (p-$b_{max}$)/$R_{max}$, (p-bavg) /$R_{avg}$) -t) ; }

Der Token Bucket (und somit auch der Dual Token Bucket) erlaubt einen großen Burst und danach ständige Maximalrate. Wenn viele solche Ströme auf eine Leitung gemultiplexed werden, die mit der exakten Summenrate der Ströme arbeitet, dann ergibt sich die maximale Warteschlange im Multiplexer aus der Addition der Maximal-Bursts (Bucket-Größen) der Token Buckets. Dieser Fall tritt ein, wenn alle Quellen saturiert sind, durch einen Spacer begrenzt werden, und gleichzeitig zu senden beginnen. Die Durchlaufzeit des Systems ist die Wartezeit in der Spacer- und der Multiplexer-Warteschlange. Problematisch ist das für Echtzeitverkehr, denn dieser erfährt auch die volle Wartezeit in der Multiplexer-Warteschlange, obwohl er nur mit wenig Verzögerung weitergeleitet werden darf. Eine kleinere Multiplexer-Warteschlange ist also wünschenswert. Dies kann erreicht werden, wenn der Spacer dafür sorgt, dass die Belastung der Multiplexer-Warteschlange durch große Bursts nach einer Weile durch eine kleine, kurzfristige Reduktion der Senderate wieder ausgeglichen wird. Genau das leistet der erfindungsgemäße Elastic Token Bucket (ETB).
Der erfindungsgemäße Elastic Token Bucket (ETB) weist einen reellen Token Bucket RTB und einem virtuellen Token Bucket VTB auf. Der reelle Token Bucket arbeitet wie der gewöhnliche Token Bucket. Der virtuelle Token Bucket hat bei konstanter Rate dieselbe Kapazität wie der reelle Token Bucket. Er reagiert aber auf Bursts mit Maßnahmen, die die Kapazität des virtuellen Buckets verringern. Dadurch blockiert der virtuelle Token Bucket bei bursthaftem Verkehr früher als der reelle Token Bucket. Der ETB blockiert, wenn entweder der reelle oder der virtuelle Token Bucket blockiert. Der reelle Token Bucket wird wie der normale Token Bucket mit der zugewiesenen Rate mit Tokens wieder aufgefüllt, die Kapazität des virtuellen Token Bucket wird aber bei niedrigem Füllstand des reellen Token Bucket verringert und somit braucht er länger bis wieder Pakete zugelassen werden können. Dadurch wird die Rate der ETB-Verkehrsbeschreibung nach großen Bursts reduziert.
Die Kapazität eines Token Bucket definiert sich über die Rate und das Bucket-Volumen. Der Token-Füllstand im reellen Tocken Bucket verrät, wie burstartig der reale Verkehr in der letzten Zeit war: Je geringer der Token-Füllstand ist, um desto mehr Bytes wurde die mittlere Rate überschritten. Also sollte die Kapazitäts-verringernde Funktion des virtuellen Token Bucket vom Token-Füllstand des reellen Token Bucket abhängig sein.
Kapazitäts-verringernde Maßnahmen für den virtuellen Token Bucket durch bursthaften Verkehr

- Verringerung der Rate: Ist der reelle Token Bucket gefüllt ($b_r$=$B_r$), so ist die Zufluss-Rate des reellen und virtuellen Token Buckets gleich. Die Zufluss-Rate $R_v(b_r)$ des virtuellen Token Buckets wird mit sinkendem Füllstand des reellen Token Bucket $b_r$ verringert. Die Zeit, die für die Quasi-Bedienung eines Paketes benötigt wird, hängt dabei vom Füllstand des reellen Token Buckets *zu Beginn der Abarbeitung* ab.

  o Die Dynamik der reellen und virtuellen Buckets wird durch die folgenden Formeln genau beschrieben:

$$b_r(t) = \min\left(B_r, b_r(LA) + R_r \cdot (t - LA)\right)$$

$$b_v(t) = \min\left(B_v, b_v(LA) + \int_{LA}^{t} R_v(b_r(x))\,dx\right)$$

  o IsConform (p,t) {return $p \leq b_r(t)$ AND $p \leq b_v(t)$;}
  o Time2Wait(p,t){return $\min_{x \geq t}(x|$ IsConform(p,x));}

Diese Formel lässt sich nur bei Kenntnis von Rv in einen einfacheren Ausdruck auflösen und nicht immer. Deswegen kann sie einfacher durch
IsConform(p,t){return EarliestTime(p) $\leq$t;}
Time2Wait(p,t){return max(0,EarliestTime(p)-t);}
berechnet werden. Für die Berechung von EarliestTime(p) kann man z.B. folgende beiden Approximationsalgorithmen nutzen:

  o Tv ist eine vorgegebene Approximations-Granularität in der Einheit Zeit für die Füllstandsberechnung des virtuellen Token Bucket. Der folgende Algorithmus berechnet den frühesten Zeitpunkt, zu dem das Paket konform ist.

```
EarliestTime(p){
    while (bv(T)+Tv*Rv(br(T))< p){
        T'= T+Tv;
        bv(T')= bv(T)+Tv*Rv(br(T));
        T=T';
    }
    Trest=(p- bv(T)) /  Rv(br(T)  ;
    Return T+Trest;
}
```

  o Nv ist eine vorgegebene Approximations-Granularität in der Einheit Token für die Füllstandsberechnung des virtuellen Token Bucket. Der folgende Algorithmus berechnet den frühesten Zeitpunkt, zu dem das Paket konform ist.

```
EarliestTime(p){
    while (bv(T)+Nv< p){
        T'= T+Nv /v(br(T);
        bv(T')= bv(T)+ Nv;
```

```
            T=T';
        }
    Trest=(p- bv(T)) /  Rv(br(T) ;
    Return T+Trest;
}
```

- Vergrößerung der virtuellen Paketgröße: Wenn die Raten des reellen und virtuellen Token Buckets gleich sind und die Tokens in gleicher Weise aufgebraucht werden, dann haben beide Buckets zu jedem Zeitpunkt den gleichen Füllstand. Somit lässt sich die Rate nicht durch eine bloße Verringerung des Bucket Volumens im Sinne der Anzahl der Tokens realisieren. Das Bucket-Volumen wird im Sinne von zulässigen Paketen durch eine variable Anzahl von benötigten Tokens für die Paket-Zulassung reduziert. Ist der reelle Token Bucket gefüllt, so ist die benötigte Token-Anzahl im virtuellen Token Bucket gleich der benötigten Token-Anzahl im reellen Token Bucket. Je niedriger der Füllstand des reellen Token Buckets ist, desto mehr Tokens benötigt es für die Zulassung am virtuellen Token Bucket. Formalisiert ist die Anzahl der benötigten Tokens eine Funktion $p_v(p, b_r)$, die von der Paketgröße p und des Füllstandes des reellen Buckets $b_r$ abhängt. Diese Funktion lässt sich über eine Streckfunktion s(x) parametrisieren.

$$p_v(p,b_r) = \int_{b_r}^{b_r+p} s(x)dx$$

Die Zeit, die für die Quasi-Bedienung eines Paketes benötigt wird, hängt dabei vom Füllstand des reellen Token Buckets *zur Ankunft des Paketes* ab. Somit ist dieses Verfahren von dem oben beschriebenen prizipiell unterschiedlich und läuft dem Füllstand des reellen Token Bucket etwas hinterher.

Die Funktion $p_v(p,b_r)$ lässt sich durch einen Lookup Table in Abhängigkeit des Füllstandes approximieren. Dabei wird die Paketlänge vernachlässigt. Bei gleichlangen Paketen ist dieses Verfahren immer noch exakt. Eine andere Approximierung für Pakete unterschiedlicher Läge p kann wie folgt geschehen.

```
pv(p,br)
{
    p'=p;  br'=br;  pv=0;
    while (p'>0)
        Δp=min(Nr,p');
        pv+=Δp*s(br');
        br'+=Δp;
        p'-=Δp;
    endwhile;
    return pv;
}
```

Es sei angemerkt, dass es im Gegensatz zu einem Spacer beim Token Bucket keine Pakete mit definierten Grenzen in der virtuellen Warteschlange gibt sondern nur noch einen Token-Füllstand, der unabhängig von Paketgrenzen ist.

**Patentansprüche**

1. Verfahren zur Beeinflussung eines Paket-basierten Datenstromes demzufolge

    - einem Reellen Füllstandsbehälter (RTB) und einem Virtuellen Füllstandsbehälter (VTB) jeweils eine Zuflussrate, die der für den Datenstrom vereinbarten Datenrate entspricht, zuführbar sind,
    - für jedes weitergeleitete Datenpaket der Füllstand sowohl des Reellen Füllstandsbehälters als auch des Virtuellen Füllstandsbehälters um die diesem Datenpaket entsprechende Datenmenge reduziert wird,
    - die Kapazität des Virtuellen Füllstandsbehälters nach Maßgabe des Füllstandes des Reellen Füllstandsbehälters gesteuert wird,
    - ein Datenpaket nur dann weitergeleitet wird, wenn die Füllhöhe sowohl des Reellen Füllstandsbehälters als auch des Virtuellen Füllstandsbehälters mindestens der Datenmenge des Datenpaketes entspricht.

2. Verfahren nach Anspruch 1
   **dadurch gekennzeichnet, dass**
   die Kapazität des Virtuellen Füllstandsbehälters gesteuert wird indem die Zuflussrate $R_v(b_r)$ des Virtuellen Füllstandsbehälters mit sinkendem Füllstand des Reellen Füllstandsbehälters verringert wird.

3. Verfahren nach einem der vorstehenden Ansprüche
   **dadurch gekennzeichnet, dass**
   die Kapazität des Virtuellen Füllstandsbehälters gesteuert wird indem für das weitergeleitete Datenpaket der Füllstand des Virtuellen Füllstandsbehälters um eine Datenmenge verringert wird, die umso größer ist je niedriger der Füllstand des Reellen Füllstandsbehälters ist.

4. Verfahren nach einem der vorstehenden Ansprüch
   **gekennzeichnet durch**
   eine Anwendung in einem System, das mit einem Spacer und einem nachfolgenden Multiplexer gebildet ist.

**Claims**

1. Method for shaping a packet-based data stream, as a result of which

    - an inflow rate, which corresponds to the agreed data rate for the data stream, can be supplied to a real token bucket (RTB} and a virtual token bucket (VTB) respectively,
    - for each forwarded data packet the occupancy level, both of the real token bucket and also of the virtual token bucket is reduced by the volume of data corresponding to this data packet,
    - the capacity of the virtual token bucket is controlled in accordance with the occupancy level of the real token bucket,
    - a data packet is only forwarded if the occupancy level both of the real token bucket and also of the virtual token bucket at least correspond to the data volume of the data packet.

2. Method in accordance with claim 1
   **characterized in that**
   the capacity of the virtual token bucket is controlled by reducing the inflow rate $R_v(b_r)$ of the virtual token bucket as the occupancy level of the real token bucket falls.

3. Method in accordance with one of the previous claims
   **characterized in that**,
   the capacity of the virtual token bucket is controlled by reducing the occupancy level of the virtual token bucket for the forwarded data packet by a data volume which is all the larger, the smaller the occupancy level of the real token bucket is.

4. Method in accordance with one of the previous claims
   **characterized by**
   use in a system which is formed with a spacer and a subsequent multiplexer.

**Revendications**

1. Procédé pour influencer un flux de données orienté paquets, selon lequel

   - un débit d'alimentation, qui correspond au débit de données convenu pour le flux de données, peut être respectivement amené à un réservoir réel à niveau de remplissage (RTB) et à un réservoir virtuel à niveau de remplissage (VTB),
   - pour chaque paquet de données transmis, le niveau de remplissage aussi bien du réservoir réel à niveau de remplissage que du réservoir virtuel à niveau de remplissage est réduit de la quantité de données correspondant à ce paquet de données,
   - la capacité du réservoir virtuel à niveau de remplissage est commandée selon le niveau de remplissage du réservoir réel à niveau de remplissage,
   - un paquet de données est seulement transmis lorsque la hauteur de remplissage aussi bien du réservoir réel à niveau de remplissage que du réservoir virtuel à niveau de remplissage correspond au moins à la quantité de données du paquet de données.

2. Procédé selon la revendication 1,
   **caractérisé en ce que**
   la capacité du réservoir virtuel à niveau de remplissage est commandée du fait que le débit $R_v(b_r)$ du réservoir virtuel à niveau de remplissage est diminué au fur et à mesure que le niveau du réservoir réel à niveau de remplissage baisse.

3. Procédé selon l'une quelconque des revendications précédentes,
   **caractérisé en ce que**
   la capacité du réservoir virtuel à niveau de remplissage est commandée du fait que, pour le paquet de données transmis, le niveau de remplissage du réservoir virtuel à niveau de remplissage est diminué d'une quantité de données qui est d'autant plus grande plus le niveau de remplissage du réservoir réel à niveau de remplissage baisse.

4. Procédé selon l'une quelconque des revendications précédentes,
   **caractérisé par**
   une application dans un système qui est formé par un spacer et un multiplexeur installé en aval.

# FIG 1

# FIG 2

# FIG 3